# EUROPEAN PATENT APPLICATION

(11) **EP 3 144 347 A1**
(43) Date of publication of application: **22.03.2017**
(21) Application number: 15185302.5
(22) Date of filing: 15.09.2015
(51) Int. Cl.: C08L 23/12, C08L 23/14, C08L 25/06, C08L 53/02

(54) **HIGH IMPACT POLYPROPYLENE BASED COMPOUND**

(71) Applicant: SCG Chemicals Co., Ltd., Bangkok 10800 (TH)
(72) Inventor: Tabtippawon, Dumrongpow, 10800 Bangkok (TH); Sukachonmakul, Tanapon, 10800 Bangkok (TH); Phonthammachai, Nopphawan, 10800 Bangkok (TH)
(74) Representative: Scholz, Volker

(57) **Abstract**

The present invention relates to a compound based on polypropylene comprising 60 -95 parts by weight of at least one polypropylene, 5-30 parts by weight of at least one polystyrene, 5-20 parts by weight of at least one styrenic block copolymer, and 0.0005 - 7 parts by weight of at least one additive; as well as to an article comprising the compound.

## Description

### FIELD OF THE INVENTION

This invention relates to the formulation of high impact polypropylene (PP) based compounds

### BACKGROUND OF THE INVENTION AND PRIOR ART

Nowadays, many attempts have been made on metal replacement by plastic materials. The advantages of plastic materials over metal and metal alloy are low cost, light weight, high production rate and better applicability due to its easy processability. Engineering plastics are known as polymers which have better mechanical and thermal properties than the most widely used commodity plastics (e.g. polypropylene, polyethylene, polystyrene, polyvinyl chloride, etc.). Currently, engineering plastics are mostly used for metal replacement in various applications such as automotive parts, aerospace interior, oil and gas pipe, and electrical appliance. Even though engineering plastics have been widely used in many applications, but being more expensive than commodity plastics causes it tends to be more specifically used. Therefore, there is an opportunity for formulating commodity plastics based compound to enhance the properties to be one of those choices for metal replacement.

Polymer blends consisting of polypropylene / polystyrene (PP/PS) are well known in the prior art.

US5969027 discloses a PP based compound for replacing conventional acrylonitrile butadiene styrene (ABS) which comprises 55-90% by weight of polypropylene, 0.5-9% by weight of a selectively hydrogenated block copolymer, 2-12% by weight of a partially hydrogenated block copolymer, 2-8% by weight of glass fiber, 20-40% by weight of calcium carbonate and 0.5-10% by weight of mica.

US6541568 discloses a high scratch resistant, stiffness and impact resistant PP based compound which comprises 40-80% by weight of polypropylene, 2-18% by weight of polyethylene, 5-30% by weight of toughening agent, 3-40% by weight of styrene block copolymer, 0-30 by weight of inorganic filler and 0-30 by weight of polymeric filler.

CN103265753A discloses a laser-markable compound for use in the application such as electrical appliance and automotive which comprises 20-85% by weight of polypropylene, 5-30% by weight of polystyrene, 10% by weight of compatibility agent and 8-40% by weight of inorganic filler, 0.5-2% by weight of photosensitizer, etc.

It is, thus, an object of the present invention to provide a compound based on polypropylene, preferably a high impact polypropylene based compound, which can be used as an engineering plastics in various applications, preferably as a high impact polymer compound. Especially, a compound shall be provided having high service temperature, good finished product appearance and balanced mechanical properties with outstandingly high impact resistance.
This object is achieved by a compound based on polypropylene comprising: 60 -95 parts by weight of at least one polypropylene, 5-30 parts by weight of at least one polystyrene, 5-20 parts by weight of at least one styrenic block copolymer and 0.0005 - 7 parts by weight of at least one additive.
In the inventive compound parts by weight is preferable percent by weight provided that the respective constituents add up to 100 percent by weight, i.e. that in this case the upper limit for the amount of the polypropylene is 84.9995.
In a preferred embodiment the at least one additive comprises 0.0005-1 parts by weight of sterically hindered phenolic antioxidant, or non-phenolic antioxidant, hydroxylamine or mixtures thereof, 0.0005-1 parts by weight of processing aid having a molecular weight below 10,000 g/mol of phosphorous-based antioxidant selected from phosphite esters, alkyl phosphites, aryl phosphites, hindered aryl phosphites or mixtures thereof, 0.002 - 2 parts by weight of UV a stabilizer selected from hindered amine light stabilizers (HALS) having a molecular weight of about 800 to 15,000 g/ mol 0.002 - 2 parts by weight of a thermoplastic polyester elastomer and optionally, 0.0005 -0.5 parts by weight of a nucleating agent.
The additives disclosed above may be used either alone or in any combination.
Preferably, the thermoplastic polyester elastomer is a polyether-ester copolymer, such as Hytrel^{®}.
It is preferred that polypropylene is selected from homopolymer, impact copolymer, random copolymer, or mixtures thereof.
PP is commonly categorized into 3 types, homopolymer, random copolymer and block copolymer. The random copolymer PP is PP which randomly copolymerized with ethylene comonomer.
Impact copolymer in terms of the invention is PP which contained ethylene-propylene rubber (ERP) as an impact modifier.
In a preferred embodiment polystyrene is selected from general purpose polystyrene or high impact polystyrene.
General purpose PS (GPPS) refers to polystyrene homopolymer while high impact polystyrene (HIPS) refers to polystyrene which randomly copolymerized with butadiene Comonomer.
Also in a preferred embodiment styrenic block copolymer is selected from styrene ethylene butadiene styrene, styrene ethylene propylene styrene, styrene butadiene styrene, or mixtures thereof.
In a preferred embodiment the processing aid is selected from phosphonites.
In a preferred embodiment the amount of polypropylene is 60-85 parts by weight.
In a preferred embodiment the polypropylene has melt index in the range of 5 -30 g/10min.
In a preferred embodiment the polystyrene has melt index in the range of 5 -30 g/10min.
In a preferred embodiment the styrenic block copolymer has melt index in the range of 5 - 30 g/10min.
Also according to the invention is an article comprising the inventive compound, which is preferably prepared by injection molding, compression molding, thermoforming or slush molding.
The present invention provides a high impact polypropylene based compound polymer comprising polypropylene, polystyrene and styrenic block copolymer as a compatibilizer.

### DETAILED DESCRIPTION OF THE INVENTION

It was surprisingly found that the compound according to the present invention provides a high impact polymer compound having high service temperature, good finished product appearance and balanced mechanical properties with outstandingly high impact resistance. It is assumed that these properties are obtained by a decent compounding process resulting in a high distribution of nano-sized domains in the polypropylene matrix providing exceptional impact properties while achieving high melt strength, thus, wide processing range in many fabrication processes such as injection molding, thermoforming, rotomolding and slush molding.

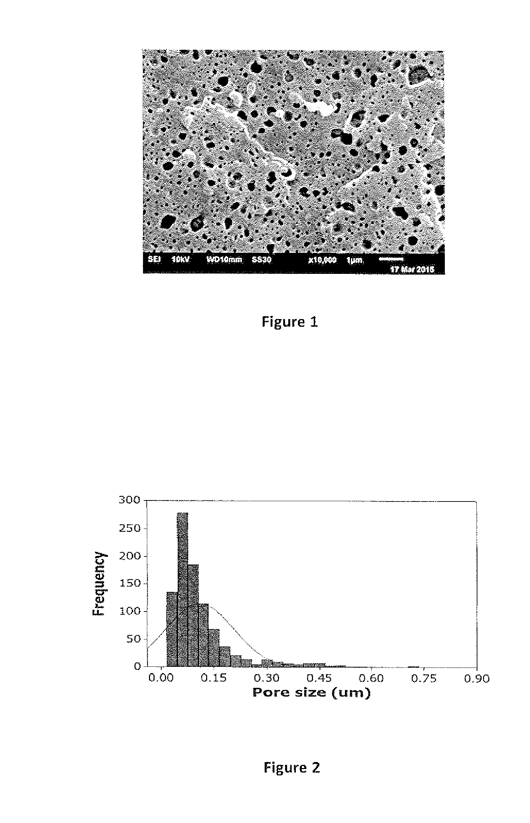

Figure 1 is an SEM-image showing the domain size of PS and styrenic block copolymer finally distributed in a PP matrix according to example 2 discussed below.
Fig. 2 shows the domain size distribution of the same example. As it is evident from Figures 1 and 2, the objective of the present invention as outlined above is indeed achieved by the inventive compound in accordance with the claims.

The materials are compounded by a twin screw extruder with high degree of mixing configuration to provide high shear for good distributive mixing of components. All of the compositions may be directly compounded in a single process or two-step compound using PS and styrenic block copolymer masterbatch compound in order to enhance blending efficiency.

### EXAMPLES

### Comparative Example 1 - PP/PE compound

Polypropylene compound comprising 25 parts by weight of linear-low density polyethylene having a melt index (MI) of 7 g/10min, 75 parts by weight random copolymer polypropylene (ethylene comonomer) having MI 12 g/10min, 0.05 parts by weight of non-phenolic antioxidant, 0.1 parts by weight of phosphorus based stabilizer, 0.4 parts by weight of Tinuvin® HALS, and 0.2 parts by weight of thermoplastic polyester elastomer (Hytrel® Polyether-ester copolymer) was well compounded together in twin screw extruder.

### Example 2 - PP compound

Polypropylene compound comprising 10 parts by weight of general purpose polystyrene having MI 8 g/10 min, 10 parts by weight of styrene ethylene butylene styrene block copolymer having MI 9 g/10min, 90 parts by weight of impact copolymer polypropylene having MI 10 g/10min, 0.05 parts by weight of non-phenolic antioxidant, 0.1 parts by weight of phosphorus based stabilizer, 0.3 parts by weight of Tinuvin® HALS, and 0.2 part by weight of polyester elastomer was well compounded together in twin screw extruder.

### Example 3 - PP compound

Polypropylene compound comprising 10 parts by weight of general purpose polystyrene having MI 8 g/10min, 7.5 parts by weight of styrene ethylene butylene styrene block copolymer having MI 9 g/10min and 2.5 parts by weight of styrene butadiene styrene block copolymer having MI 14 g/10min, and 90 part by weight of impact copolymer polypropylene having MI 10 g/10min was well compounded together in twin screw extruder. The additives are the same as in Example 2.

### Example 4 - PP compound

Polypropylene compound comprising 20 parts by weight of general purpose polystyrene having MI 8 g/10min, 20 parts by weight of styrene ethylene butylene styrene blockn copolymer havingMI 9 g/10min, and 80 parts by weight of homopolymer polypropylene having MI 12 g/10min was well compounded together in twin screw extruder. The additives are the same as in Example 2.
The melt index (MI) for all ingredients stated above has been measured according to ASTM D 1238 (230°C and 2.16 kg weight)

**TABLE 1**

| Properties | Unit | Method | Comparative Example1 | Example2 | Example3 | Example4 |
|---|---|---|---|---|---|---|
| HDT | ºC | ASTM D648 | 96.8 | 95.8 | 91.8 | 92.3 |
| Flexural Modulus | MPa | ASTM D790 | 1000 | 1182 | 1033 | 1030 |
| Impact Strength | kg.cm/cm | ASTM D256 | 5.6 | 49.9 | 57.8 | 26.9 |
| Tensile Strength | MPa | ASTM D638 | 26 | 23 | 23 | 24 |
| Hardness | D-Scale | ASTM D2240 | 63.7 | 63 | 65.8 | 64.4 |

In table 1, HDT is for Heat Deflection Temperature (ASTM D 648)

The mechanical and thermal properties of Example 1- 4 are shown in Table 1. Comparative Example 1 is a PP compound for rotomolding according to the prior art. It can also be grinded without cryogenic system and gives outstanding rotomolding surface quality. However, its application is limited due to its low impact resistance. Example 2 has high dimensional stability at ambient and high temperature as shown in flexural modulus and HDT respectively. Example 2 and 3 has relatively high impact resistance while Example 4 has slightly higher tensile strength as shown in table 1.

## Claims

1. Compound based on polypropylene comprising :
a. 60 -95 parts by weight of at least one polypropylene,
b. 5-30 parts by weight of at least one polystyrene,
c. 5-20 parts by weight of at least one styrenic block copolymer, and
d. 0.0005 - 7 parts by weight of at least one additive.

2. Compound according to claim 1 wherein the at least one additive comprises;
i. 0.0005-1 parts by weight of sterically hindered phenolic antioxidant, non-phenolic antioxidant, hydroxylamine or mixtures thereof,
ii. 0.0005-1 parts by weight of processing aid having a molecular weight below 10,000 g/mol of phosphorus-based antioxidant selected from phosphite esters, alkyl phosphites, aryl phosphites, hindered arly phosphites, or mixture thereof ,
iii. 0.002 - 2 parts by weight of UV a stabilizer selected from hindered amine light stabilizers (HALS) having a molecular weight of about 800 to 15,000 g/mol
iv. 0.002 - 2 parts by weight of a thermoplastic polyester elastomer,
v. optionally, 0.0005 -0.5 parts by weight of a nucleating agent

3. Compound according to claim 1 or 2 wherein polypropylene is selected from homopolymer, impact copolymer, random copolymer, or mixtures thereof.

4. Compound according to any of claims 1 - 3 wherein polystyrene is selected from general purpose polystyrene or high impact polystyrene.

5. Compound according to any of claims 1 - 4 wherein styrenic block copolymer is selected from styrene ethylene butadiene styrene, styrene ethylene propylene styrene, styrene butadiene styrene, or mixtures thereof.

6. Compound according to any of claims 2 - 5 wherein the processing aid is selected from phosphonites.

7. Compound according to any of claims 1 - 6 wherein the amount of polypropylene is 60-85 parts by weight.

8. Compound according to any of claims 1 - 7 wherein the polypropylene has melt index in the range of 5 -30 g/10min.

9. Compound according to any of claims 1 - 8 wherein the polystyrene has melt index in the range of 5 -30 g/10min.

10. Compound according to any of claims 1 - 9 wherein the styrenic block copolymer has melt index in the range of 5 -30 g/10min.

11. An article comprising the compound of any of claims 1 - 10, which is preferably prepared by injection molding, compression molding, thermoforming or slush molding.
